# EUROPEAN PATENT APPLICATION

(11) **EP 4 755 860 A1**
(43) Date of publication of application: **10.06.2026**
(21) Application number: 24849168.0
(22) Date of filing: 30.07.2024
(51) Int. Cl.: C03C 27/06, E06B 3/66

(54) **MULTI-LAYERED GLASS**

(30) Priority: 01.08.2023 JP 2023125277
(71) Applicant: AGC INC., Chiyoda-ku, Tokyo 1008405 (JP)
(72) Inventor: MATSUI, Tohru, Tokyo 100-8405 (JP); KIKUCHI, Satoshi, Tokyo 100-8405 (JP)
(74) Representative: Müller-Boré & Partner Patentanwälte PartG mbB
(86) International application number: PCT/JP2024/027147
(87) International publication number: WO 2025/028523

(57) **Abstract**

To provide a technology to suppress warpage of a vacuum insulated glass caused by high heat insulating property of the vacuum insulated glass. A multiple glazing comprises a vacuum insulated glass having a first glass plate, a vacuum layer and a second glass plate in this order in a predetermined direction, a gas layer, and a third glass plate or a laminated glass in this order in the above predetermined direction. A thickness of the third glass plate or the laminated glass is larger than a thickness of the vacuum insulated glass.

## Description

### TECHNICAL FIELD

The present invention relates to a multiple glazing.

### BACKGROUND ART

A multiple glazing having a vacuum insulated glass incorporated has been known. The vacuum insulated glass has a first glass plate, a vacuum layer and a second glass plate in this order in a predetermined direction. The vacuum layer suppresses, among the three mode of heat transfer (radiation, conduction and convection), conduction and convection and develops high insulation performance.

A multiple glazing as disclosed in the following Patent Document 1 has a vacuum insulated glass and a normal glass plate at a distance. Between the vacuum insulated glass and the normal glass plate, dry air or a rare gas is sealed in. According to Patent Document 1, Table 1, the vacuum insulated glass and the normal glass plate have the same thickness.

### PRIOR ART DOCUMENTS

### PATENT DOCUMENTS

Patent Document 1: JP-A-H10-87350

### DISCLOSURE OF INVENTION

### TECHNICAL PROBLEM

The vacuum insulated glass has high insulation performance and may have a significant temperature difference in a predetermined direction. The temperature difference causes a difference in dimensions between the first glass plate and the second glass plate, and thus causes warpage of the vacuum insulated glass. If the vacuum insulated glass warps, the first glass plate and the second glass plate will warp in the same direction to the same degree.

According to an embodiment of the present disclosure, provided is a technique to suppress warpage of a vacuum insulated glass incorporated in a multiple glazing due to its high insulation performance of the vacuum insulated glass.

### SOLUTION TO PROBLEM

The multiple glazing according to an embodiment of the present disclosure, comprises a vacuum insulated glass having a first glass plate, a vacuum layer and a second glass plate in this order in a predetermined direction, a gas layer, and a third glass plate or a laminated glass in this order in the above predetermined direction. The thickness of the third glass plate or the laminated glass is larger than the thickness of the vacuum insulated glass.

### ADVANTAGEOUS EFFECTS OF INVENTION

According to an embodiment of the present disclosure, the thickness of the third glass plate or the laminated glass is larger than the thickness of the vacuum insulated glass. Thus, utilizing thermal expansion or thermal shrinkage of the gas layer formed between the third glass plate or the laminated glass and the vacuum insulated glass, warpage of the vacuum insulated glass caused by high insulation performance of the vacuum insulated glass can be suppressed.

### BRIEF DESCRIPTION OF DRAWINGS

Fig. 1 is a cross sectional view illustrating the multiple glazing according to an embodiment.
Fig. 2 is an enlarged cross sectional view illustrating a part of the multiple glazing shown in Fig. 1.
Fig. 3A is a cross sectional view illustrating a state of a conventional multiple glazing such that the temperature increases toward a predetermined direction (the left side in the drawing), and Fig. 3B is a cross sectional view illustrating a state of the multiple glazing of Example of the present invention such that the temperature increases toward a predetermined direction (the left side in the drawing).
Fig. 4A is a cross sectional view illustrating a state of a conventional multiple glazing such that the temperature decreases toward a predetermined direction (the left side in the drawing), and Fig. 4B is a cross sectional view illustrating a state of the multiple glazing of Example of the present invention such that the temperature decreases toward a predetermined direction (the left side in the drawing).
Fig. 5 is a cross sectional view illustrating an example of a low-emissivity coating.
Fig. 6 is a cross sectional view illustrating an example of a multiple glazing having a laminated glass instead of the third glass plate.
Fig. 7 is a cross sectional view illustrating an example of an embodiment in which a low reflective coating is formed on the multiple glazing shown in Fig. 6.

### DESCRIPTION OF EMBODIMENTS

Now, embodiments of the present disclosure will be described with reference to drawings. In the drawings, the same or corresponding configurations are represented by the same reference symbols and their description may be omitted. In this specification, " to " used to show the range of the numerical values is used to include the numerical values before and after it as the lower limit value and the upper limit value.

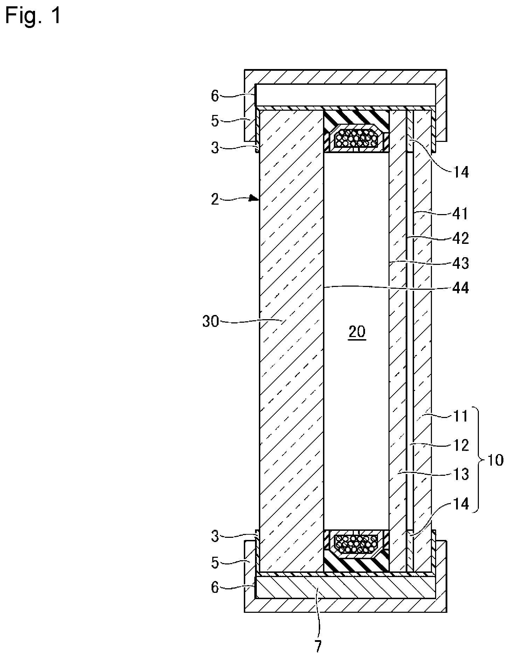

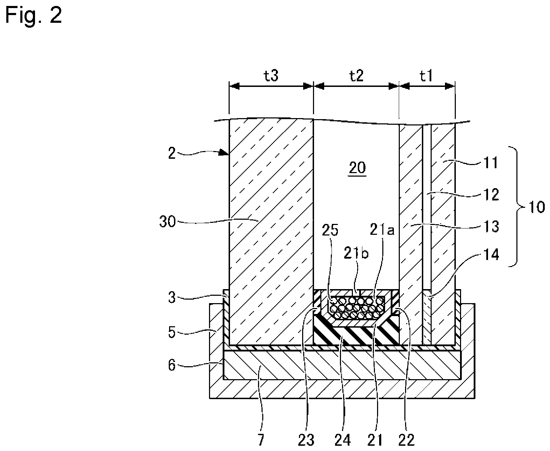

A multiple glazing 2 according to an embodiment will be described with reference to Fig. 1 and Fig. 2. The multiple glazing 2 is used for example as a window glass of a building. The multiple glazing 2 stands vertically in this embodiment, however, it may be disposed on a slant or horizontally. The shape of the multiple glazing 2 as observed from the interior or the exterior of a room is rectangular in this embodiment, however, it may be circular, semi-circular, trapezoidal or triangular and is not particularly limited. In the case of a shape with angles, such as rectangular, trapezoidal or triangular, the angles may be rounded.

In a case where the shape of the multiple glazing 2 as observed from the interior or the exterior of a room, the length of the shortest side of the rectangle is preferably 600 mm or more, more preferably 1000 mm or more. In general, the larger the size of the multiple glazing 2 is, the more warpage is likely to occur. The larger the size of the multiple glazing 2 is, the more the effect of suppressing warpage by the technique of the present disclosure is likely to be obtained.

The multiple glazing 2 has a vacuum insulated glass 10, a gas layer 20 and a third glass plate 30 in this order in a predetermined direction (the left side in Fig. 1 and Fig. 2). In this specification, the predetermined direction is a direction along the thickness direction. The predetermined direction is a direction from the interior to the exterior in this embodiment, however, it may be a direction from the exterior to the interior.

The vacuum insulated glass 10 has a first glass plate 11, a vacuum layer 12 and a second glass plate 13 in this order in a predetermined direction. The pressure in the vacuum layer 12 is preferably 1×10⁻⁵ Pa to 10 Pa, more preferably 1×10⁻⁵ Pa to 0.1 Pa. The vacuum layer 12 suppressed, among the three mode of heat transfer (radiation, conduction and convection), conduction and convection and develops high insulation performance.

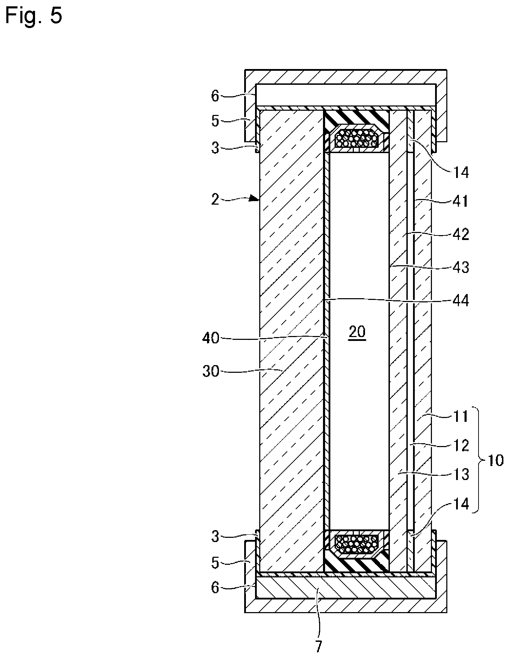

In order to suppress radiation, which is the rest of the three mode of heat transfer, a low-emissivity coating 40 may be provided as shown in Fig. 5, and its details will be described later. The low-emissivity coating 40 is provided, in order not to be exposed to the air, on at least one of a first surface 41 and a second surface 42, facing each other, of the first glass plate 11 and the second glass plate 13, and a third surface 43 and a fourth surface 44, facing each other, of the vacuum insulated glass 10 and the third glass plate 30.

The vacuum insulated glass 10 has high insulation performance and may have a significant temperature difference in a predetermined direction. The exterior temperature may be higher than the interior temperature, or the interior temperature may be higher than the exterior temperature. The vacuum insulated glass 10 is disposed on the interior side relative to the third glass plate 30 in this embodiment, however, it may be disposed on the exterior side relative to the third glass plate 30,

The first glass plate 11 and the second glass plate 13 are formed of conventional glass for buildings. The glass may, for example, be soda lime glass, aluminosilicate glass, borosilicate glass or alkali free glass. The glass may be either non-tempered glass or tempered glass. The tempered glass may be either air-cooled tempered glass or chemically tempered glass. The glass may be crystallized glass.

The thickness of the first glass plate 11 and the thickness of the second glass plate 13 may be the same or different. By the thicknesses of the first glass plate 11 and the second glass plate 13 being different, it is possible to prevent the first glass plate 11 and the second glass plate 13 from being broken by a temperature difference.

In a case where the thicknesses of the first glass plate 11 and the second glass plate 13 are different, the thickness of the first glass plate 11 may be larger than the thickness of the second glass plate 13 by 1 mm or more, by 2 mm or more, or by 3 mm or more. Within such a range, it is possible to prevent breakage of the first glass plate 11 and the second glass plate 13 by a temperature difference when the third glass plate 30 is at a lower temperature than the first glass plate 11.

In a case where the thicknesses of the first glass plate 11 and the second glass plate 13 are different, the thickness of the first glass plate 11 may be smaller than the thickness of the second glass plate 13 by 1 mm or less, by 2 mm or more or by 3 mm or less. Within such a range, it is possible to prevent breakage of the first glass plate 11 and the second glass plate 13 by a temperature difference when the third glass plate 30 is at a higher temperature than the first glass plate 11.

The vacuum layer 12 is formed between the first glass plate 11 and the second glass plate 13. The thickness of the vacuum layer 12 is preferably 0.05 mm or more, more preferably 0.07 mm or more. When the thickness of the vacuum layer 12 is 0.05 mm or more, high insulation performance will be achieved. The thickness of the vacuum layer 12 is preferably 0.2 mm or less, more preferably 0.15 mm or less, further preferably 0.10 mm or less. When the thickness of the vacuum layer 12 is 0.2 mm or less, the first glass plate 11 and the second glass plate 13 are less likely to warp, and deterioration of the appearances of the first glass plate 11 and the second glass plate 13 due to reflected light is less likely to occur.

In order to keep a constant thickness of the vacuum layer 12, pillars, which are not shown, may be provided between the first glass plate 11 and the second glass plate 13. In a case where pillars are provided, a plurality of pillars are disposed two dimensionally. The thicknesses of the pillars are equal to the thickness of the vacuum layer 12.

The vacuum insulated glass 10 has a sealing layer 14. The sealing layer 14 is provided along the periphery of the vacuum insulated glass 10. The sealing layer 14 seals the vacuum layer 12 and bonds the first glass plate 11 and the second glass plate 13. The sealing layer 14 is preferably a glass layer, not a resin layer. A glass layer can maintain a desired pressure of the vacuum layer 12 over a long period of time.

The glass layer as the sealing layer 14 may be formed by filling a space between the first glass plate 11 and the second glass plate 13 with glass frits, and baking the glass frits. The glass frits may be baked in the air at high temperature to form the glass layer and then the vacuum layer 12 is formed through evacuation, or the glass frits may be baked in vacuum at high temperature to form the glass layer and the vacuum layer 12 simultaneously.

The gas layer 20 is formed between the vacuum insulated glass 10 and the third glass plate 30. The gas layer 20 has a coefficient of thermal conductivity lower than the glass and improves insulation performance. The gas layer 20 is constituted for example by dry air or a rare gas. The dry air is a gas having water vapor removed from the air, so as to prevent dew condensation. The rare gas may, for example, be Ar gas, He gas or Kr gas. The rare gas has a coefficient of thermal conductivity lower than the dry air and can further improve insulation performance.

The third glass plate 30 is provided to face the second glass plate 13 of the vacuum insulated glass 10. The third glass plate 30 is provided on the exterior side relative to the vacuum insulated glass 10 in this embodiment, however, it may be provided on the interior side relative to the vacuum insulated glass 10. The third glass plate 30 is formed, like the first glass plate 11 and the second glass plate 13, of conventional glass for buildings. The glass may, for example, be soda lime glass, aluminosilicate glass, borosilicate glass or alkali free glass. The glass may be either non-tempered glass or tempered glass. The tempered glass may be either air cooled tempered glass or chemically tempered glass. The glass may be crystallized glass. The third glass plate 30 may be wired glass or patterned glass, and may be a laminated glass. In a case where the third glass plate 30 is a laminated glass, at least one glass plate of the laminated glass may be tempered glass.

As shown in Fig. 2, the multiple glazing 2 has, between the vacuum insulated glass 10 and the third glass plate 30, the gas layer 20, a spacer 21, primary seals 22, 23 and a secondary seal 24. The spacer 21, the primary seals 22, 23, and the secondary seal 24 are provided along the periphery of the multiple glazing 2 so as to surround the gas layer 20 to suppress invasion the gas layer 20 by the air.

The spacer 21 keeps the vacuum insulated glass 10 and the third glass plate 30 away from each other and keeps the thickness t2 of the gas layer 20 to be a predetermined thickness.

The spacer 21 has a compartment 21a to store a drying agent 25, and a through-hole 21b connecting the compartment 21a and the gas layer 20. The drying agent 25 may, for example, be particulate zeolite. The drying agent 25 absorbs water vapor to dry the gas layer 20. The material of the spacer 21 may, for example, be a metal or a resin. The metal may, for example, be aluminum or stainless steel.

The primary seal 22 is provided between the vacuum insulated glass 10 and the spacer 21. The primary seal 23 is provided between the spacer 21 and the third glass plate 30. The primary seal 22, 23 is not particularly limited and may, for example, contain a butyl rubber or a polyisobutylene as the main component. The primary seal 22, 23 may further contain a filler such as carbon black for the purpose of coloring and reinforcement.

The secondary seal 24 is disposed on the opposite side of the spacer 21 from the gas layer 20 and bonds the spacer 21, the vacuum insulated glass 10 and the third glass plate 30. The secondary seal 24 preferably contains a curable elastomer as the main component. The curable elastomer may, for example, be polysulfide, silicone or urethane. The curable elastomer may be properly modified from the viewpoint of adhesion.

In the present embodiment, the spacer 21, the primary seals 22, 23 and the secondary seal 24 are used, however, a sealing member which functions as a spacer and a seal may be used instead. The sealing member is constituted by a resin. A single sealing member may be used or a plurality of sealing members may be used as a multilayer. In a case where a plurality of sealing members are used, the plurality of the sealing members are continuously arranged in a direction at right angles to the interface of the sealing member and the gas layer 20.

The multiple glazing 2 is inserted to a groove 6 of a window frame 5 via a glazing channel 3 for example. The glazing channel 3 is provided along the periphery of the multiple glazing 2 and fills a gap between the multiple glazing 2 and the window frame 5. On the groove 6 of the window frame 5, a setting block 7 may be provided. The multiple glazing 2 is placed on the setting block 7.

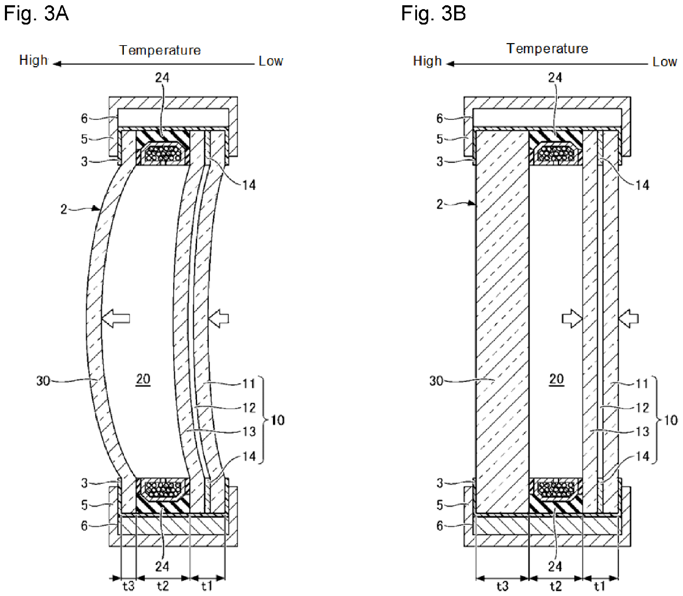

With reference to Fig. 3A, a state of the conventional multiple glazing 2 such that the temperature increases toward a predetermined direction (the left side in the drawing) will be described. The right side of the multiple glazing 2 corresponds to the interior of a room, and the left side of the multiple glazing 2 corresponds to the exterior of a room. For example in summer, the exterior temperature is higher than the interior temperature, and the temperature increases toward the left side in the drawing.

The temperature difference in the vacuum insulated glass 10 causes a difference in dimensions between the first glass plate 11 and the second glass plate 13. The sealing layer 14 is thinner and harder than the secondary seal 24 and thus does not generate shear deformation which absorbs the difference in dimensions between the first glass plate 11 and the second glass plate 13. Thus, if the difference in dimensions between the first glass plate 11 and the second glass plate 13 occurs, the first glass plate 11 and the second glass plate 13 warp in the same direction to the same degree. The warpage may, for example, be convex toward the exterior side (the left side in Fig. 3A).

In the conventional multiple glazing 2, the thickness t3 of the third glass plate 30 is equal to or less than the thickness t1 of the vacuum insulated glass 10. That is, in the conventional multiple glazing 2, in a side view, the flexural rigidity of the third glass plate 30 is equal to or less than the flexural rigidity of the vacuum insulated glass 10. Thus, the third glass plate 30 is likely to bend.

If the vacuum insulated glass 10 warps, the vacuum insulated glass 10 pushes the third glass plate 30 via the gas layer 20. The third glass plate 30 is likely to bend and warp in the same direction as the vacuum insulated glass 10 to a higher degree than the vacuum insulated glass 10. The third glass plate 30 warps significantly, because in summer, the temperature of the gas layer 20 is higher than the temperature of the gas layer 20 at the time of production of the multiple glazing 2, whereby thermal expansion of the gas layer 20 occurs. The thermal expansion of the gas layer 20 promotes warpage of the third glass plate 30.

A temperature difference between the vacuum insulated glass 10 and the third glass plate 30 may cause a difference in dimensions. However, the secondary seal 24 is constituted e.g. by a rubber and is capable of shear deformation so as to absorb the difference in dimensions between the vacuum insulated glass 10 and the third glass plate 30. Thus, substantially no warpage due to a difference in dimensions between the vacuum insulated glass 10 and the third glass plate 30 occurs.

With reference to Fig. 3B, a state of the multiple glazing 2 of the Example of the present invention such that the temperature increase toward a predetermined direction (the left side in the drawing) will be described. In the multiple glazing 2 of the Example of the present invention, the thickness t3 of the third glass plate 30 is larger than the thickness t1 of the vacuum insulated glass 10. That is, in the multiple glazing 2 of the Example of the present invention, in a side view, the flexural rigidity of the third glass plate 30 is larger than the flexural rigidity of the vacuum insulated glass 10.

According to the Example of the present invention, the third glass plate 30 does not substantially bend. Thus, even if the vacuum insulated glass 10 tries to warp, protruding to the left, the third glass plate 30 pushes the vacuum insulated glass 10 back to the right via the gas layer 20. Thermal expansion of the gas layer 20 also acts to push the vacuum insulated glass 10 back to the right. In such a mechanism, warpage of the vacuum insulated glass 10 can be suppressed.

The thickness t2 of the gas layer 20 is preferably larger than the thickness of the vacuum layer 12. The thickness t2 of the gas layer 20 is preferably 3 mm or more, more preferably 5 mm or more. When t2 is 3 mm or more, thermal expansion of the gas layer 20 will be sufficiently large. When t2 is 3 mm or more, thermal shrinkage of the gas layer 20 described later will be sufficiently large. The thickness t2 of the gas layer 20 is preferably 20 mm or less, more preferably 15 mm or less. When t2 is 20 mm or less, convection can be suppressed.

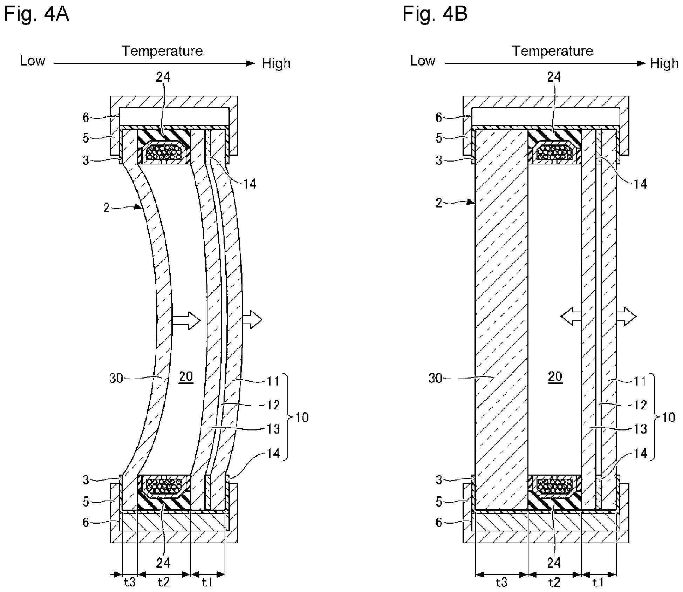

With reference to Fig. 4A, a state of the conventional multiple glazing 2 such that the temperature decreases toward a predetermined direction (the left side in the drawing) will be described. The right side of the multiple glazing 2 corresponds to the interior of a room, and the left side of the multiple glazing 2 corresponds to the exterior of a room. For example in winter, the exterior temperature is lower than the interior temperature, and the temperature decreases toward the left side in the drawing.

The temperature difference in the vacuum insulated glass 10 causes a difference in dimensions between the first glass plate 11 and the second glass plate 13. The sealing layer 14 is thinner and harder than the secondary seal 24 and thus does not substantially generate shear deformation which absorbs the difference in dimensions between the first glass plate 11 and the second glass plate 13. Thus, if the difference in dimensions between the first glass plate 11 and the second glass plate 13 occurs, the first glass plate 11 and the second glass plate 13 warp in the same direction to the same degree. The warpage may, for example, be convex toward the interior side (the right side in Fig. 4A).

In the conventional multiple glazing 2, the thickness t3 of the third glass plate 30 is equal to or less than the thickness t1 of the vacuum insulated glass 10. That is, in the conventional multiple glazing 2, in a side view, the flexural rigidity of the third glass plate 30 is equal to or less than the flexural rigidity of the vacuum insulated glass 10. Thus, the third glass plate 30 is likely to bend.

If the vacuum insulated glass 10 warps, the vacuum insulated glass 10 pulls the third glass plate 30 via the gas layer 20. The third glass plate 30 is likely to bend and warp in the same direction as the vacuum insulated glass 10 to a higher degree than the vacuum insulated glass 10. The third glass plate 30 warps significantly, because in winter, the temperature of the gas layer 20 is lower than the temperature of the gas layer 20 at the time of production of the multiple glazing 2, whereby thermal shrinkage of the gas layer 20 occurs. The thermal shrinkage of the gas layer 20 promotes warpage of the third glass plate 30.

With reference to Fig. 4B, a state of the multiple glazing 2 of the Example of the present invention such that the temperature decreases toward a predetermined direction (the left side in the drawing) will be described. In the multiple glazing 2 of the Example of the present invention, the thickness t3 of the third glass plate 30 is larger than the thickness t1 of the vacuum insulated glass 10. That is, in the multiple glazing 2 of the Example of the present invention, in a side view, the flexural rigidity of the third glass plate 30 is larger than the flexural rigidity of the vacuum insulated glass 10.

According to the Example of the present invention, the third glass plate 30 does not substantially bend. Thus, even if the vacuum insulated glass 10 tries to warp, protruding to the right, the third glass plate 30 pulls the vacuum insulated glass 10 back to the left via the gas layer 20. Thermal shrinkage of the gas layer 20 also acts to pull the vacuum insulated glass 10 back to the left. In such a mechanism, warpage of the vacuum insulated glass 10 can be suppressed.

The difference between the thickness t3 of the third glass plate 30 and the thickness t1 of the vacuum insulated glass 10, that is t3-t1, is preferably 0.5 mm or more, more preferably 1.0 mm or more, further more preferably 2.0 mm or more. When the difference (t3-t1) is 0.5 mm or more, the difference in the flexural rigidity is sufficiently large. The difference (t3-t1) is, for example, 3.0 mm or less, in view of thickness reduction of the multiple glazing 2.

At least one of the first glass plate 11 and the second glass plate 13 may be tempered glass. The tempered glass is excellent in strength (hardly broken) and can be made thin as compared with non-tempered glass. Thus, the vacuum insulated glass 10 can be made thin and a difference in the flexural rigidity between the vacuum insulated glass 10 and the third glass plate 30 can be made large. The thickness of the tempered glass is preferably 0.5 mm to 2.0 mm, more preferably 1.0 mm to 2.0 mm.

The tempered glass may be either air cooled tempered glass or chemically tempered glass, but the tempered glass is preferably chemically tempered glass. The chemically tempered glass can be produced without imparting a temperature difference unlike the air cooled tempered glass and is suitable for thickness reduction as compared with the air cooled tempered glass.

Air cooling is to quench a uniformly heated glass plate from a temperature in the vicinity of the softening temperature to cause a compression stress on the glass surface due to a temperature difference between the glass surface and the glass interior. Chemical tempering is to replace alkali metal ions contained in the glass surface with another alkali metal ions with a larger ion radius to cause a compression stress on the glass surface.

The surface compressive stress of the chemically tempered glass is preferably 340 MPa or more, more preferably 360 MPa or more, further preferably 380 MPa or more. The surface compressive stress of the chemically tempered glass is preferably 650 MPa or less in view of the production cost.

The depth of the compressive stress layer of the chemically tempered glass is preferably 20 µm or more, more preferably 24 µm or more, further more preferably 28 µm or more. The depth of the compressive stress layer of the chemically tempered glass is preferably 50 µm or less in view of the production cost.

As shown in Fig. 5, the multiple glazing 2 may have a low-emissivity coating 40 so as to suppress radiation. The low-emissivity coating 40 is also called Low-E coating. When the multiple glazing 2 has the low-emissivity coating 40, insulation performance of the multiple glazing 2 will further improve, and thus the application of the present invention is highly beneficial.

The low-emissivity coating 40 may have, for example, a heat reflective layer. The heat reflective layer contains silver (Ag) or tin oxide (SnO₂). The low-emissivity coating 40 may contain a plurality of layers and may contain a heat reflective layer and a dielectric layer. The dielectric layer is constituted e.g. by an oxide, a nitride or an oxynitride. The low-emissivity coating 40 is formed e.g. by chemical vapor deposition or sputtering.

In order that the low-emissivity coating 40 is not exposed to the air, it is provided on at least one of a first surface 41 and a second surface 2, facing each other, of the first glass plate 11 and the second glass plate 13, and a third surface 43 and a fourth surface 44, facing each other, of the vacuum insulated glass 10 and the third glass plate 30 (on the fourth surface 44 in Fig. 5), whereby it is possible to suppress oxidation of the low-emissivity coating 40 by water vapor in the air and damage of the low-emissivity coating 40 by dust.

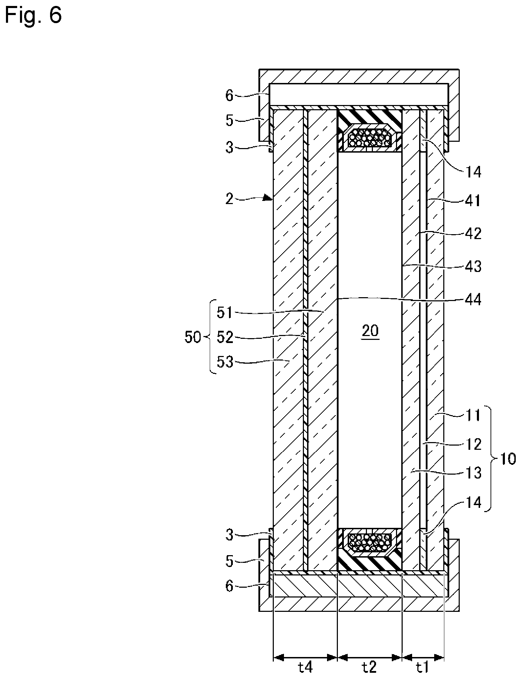

As shown in Fig. 6, the multiple glazing 2 may have a laminated glass 50 instead of the third glass plate 30. The laminated glass 50 has more than one (for example two) glass plates 51, 53 and an interlayer 52 to bond the adjacent two glass plates 51, 53. In this case, the thickness t4 of the laminated glass 50 should be larger than the thickness t1 of the vacuum insulated glass 10.

The difference between the thickness t4 of the laminated glass 50 and the thickness t1 of the vacuum insulated glass 10, (t4-t1), is preferably 0.5 mm or more, more preferably 1.0 mm or more, further more preferably 2.0 mm or more. When the difference (t4-t1) is 0.5 mm or more, the difference in the flexural rigidity will be sufficiently large. The difference (t4-t1) is, in view of thickness reduction of the multiple glazing 2, for example 3.0 mm or less.

The interlayer 52 may be of an organic resin commonly employed for a conventional laminated glass. The organic resin my, for example, be polyvinyl butyral (PVB) or an ethylene/vinyl acetate copolymer (EVA), in view of transparency and fixation property.

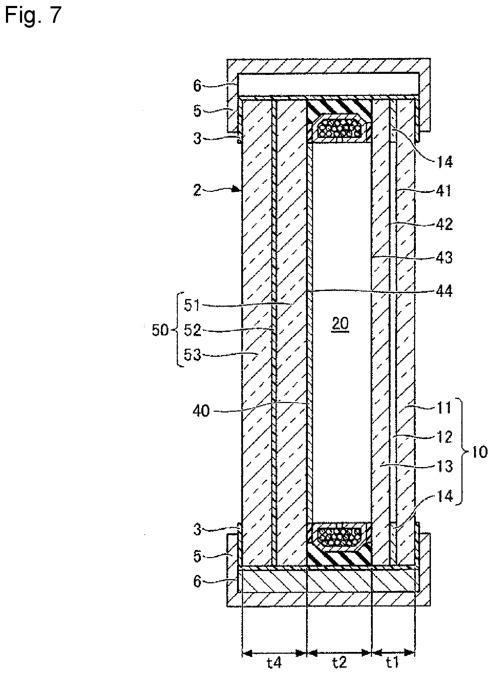

As shown in Fig. 7, the low-emissivity coating 40 may be provided on at least one of a third surface 43 and a fourth surface 44, facing each other, of the vacuum insulated glass 10 and the laminated glass 50. The low-emissivity coating 40 may be provided, as described above, on at least one of the first surface 41 and the second surface 42, facing each other, of the first glass plate 11 and the second glass plate 13.

### EXAMPLES

Now, experimental data will be described. The following Ex. 1 is an Example of the present invention and Ex. 2 is a Comparative Example. In Ex. 1 and Ex. 2, a multiple glazing 2 was produced under the same conditions except for the thickness t3 of the third glass plate 30. The multiple glazing 2 is constituted by the vacuum insulated glass 10, the gas layer 20 and the third glass plate 30, as shown in Fig. 1 and the like. In Ex. 1, the thickness t3 of the third glass plate 30 was 8.0 mm. In Ex. 2, the thickness t3 of the third glass plate 30 was 3.0 mm. The shape of the multiple glazing 2 as observed from the interior or exterior side was a 600 mm square.

In both Ex. 1 and Ex. 2, the thickness t1 of the vacuum insulated glass 10 was 6.1 mm, and the thickness t2 of the gas layer 20 was 12 mm. The thickness of the first glass plate 11 was 3.0 mm, the thickness of the second glass plate 13 was 3.0 mm, and the thickness of the vacuum layer 12 was 0.1 mm. Further, all of the first glass plate 11, the second glass plate 13 and the third glass plate 30 were non-tempered glass. The low-emissivity coating 40 was formed only on the second surface 42.

In Ex. 1 and Ex. 2, the multiple glazing 2 produced was installed in a window of a chamber, and 4 cycles, each cycle comprising changing the temperature inside the chamber ranging from -21°C to 48°C, were conducted over a period of 2 days. The multiple glazing 2 was installed so that the vacuum insulated glass 10 faced outside the chamber, and the third glass plate 30 faced inside the chamber. Since the temperature inside the chamber changed, the inside of the chamber corresponded the exterior of a room, and the outside of the chamber corresponds to the interior of a room. The temperature outside the chamber was kept at 24°C to 25°C. In such a state, warpage of the vacuum insulated glass 10 and warpage of the third glass plate 30 were measured. The measurement results are shown in Table 1.

**Table 1**

| | | | Ex. 1 | Ex. 2 |
|---|---|---|---|---|
| Thickness t1 [mm] of vacuum insulated glass | | | 6.1 | 6.1 |
| Thickness t3 [mm] of third glass | | | 8.0 | 3.0 |
| Summer | Exterior temperature [°C] | | 48 | 48 |
| | Interior temperature [°C] | | 25 | 25 |
| | Gas layer temperature [°C] | | 43 | 46 |
| | Vacuum insulated glass | Direction of warpage | convex to the interior | convex to the exterior |
| | | Amount [mm] of warpage | 0.6 | 1.1 |
| | Third glass plate | Direction of warpage | convex to the exterior | convex to the exterior |
| | | Amount [mm] of warpage | 0.9 | 3.2 |
| Winter | Exterior temperature [°C] | | -21 | -21 |
| | Interior temperature [°C] | | 24 | 24 |
| | Gas layer temperature [°C] | | -13 | -20 |
| | Vacuum insulated glass | Direction of warpage | convex to the exterior | convex to the interior |
| | | Amount [mm] of warpage | 1.3 | 1.7 |
| | Third glass plate | Direction of warpage | convex to the interior | convex to the interior |
| | | Amount [mm] of warpage | 1.7 | 5.7 |

First, results of measurement of warpage in summer will be described. As shown in Fig. 3A and Fig. 3B, in summer, the exterior temperature is higher than the interior temperature, and the temperature increases toward the left direction in the drawing. In Ex. 2, as shown in Fig. 3A, the thickness t3 of the third glass plate 30 is smaller than the thickness t1 of the vacuum insulated glass 10, the vacuum insulated glass 10 warped convex to the exterior side (the left side in Fig. 3A), and the third glass plate 30 warped in the same direction as the vacuum insulated glass 10 to a higher degree than the vacuum insulated glass 10. Whereas in Ex. 1, as shown in Fig. 3B, the thickness t3 of the third glass plate 30 is larger than the thickness t1 of the vacuum insulated glass 10, warpage of the vacuum insulated glass 10 was small, and warpage of the third glass plate 30 was also small. In Ex. 1, the third glass plate 30 does not substantially bend. Thus, even if the vacuum insulated glass 10 tries to warp, protruding to the left, the third glass plate 30 pushes the vacuum insulated glass 10 back to the right via the gas layer 20. Thermal expansion of the gas layer 20 also acts to push the vacuum insulated glass 10 back to the right. Accordingly, warpage of the vacuum insulated glass 10 can be suppressed.

Now, results of measurement of warpage in winer will be described. As shown in Fig. 4A and Fig. 4B, in winter, the exterior temperature is lower than the interior temperature, and the temperature decreases toward the left direction in the drawing. In Ex. 2, as shown in Fig. 4A, the thickness t3 of the third glass plate 30 is smaller than the thickness t1 of the vacuum insulated glass 10, the vacuum insulated glass 10 warped convex to the interior side (the right side in Fig. 4A), and the third glass plate 30 warped in the same direction as the vacuum insulated glass 10 to a higher degree than the vacuum insulated glass 10. Whereas in Ex. 1, as shown in Fig. 4B, the thickness t3 of the third glass plate 30 was larger than the thickness t1 of the vacuum insulated glass 10, warpage of the vacuum insulated glass 10 was small, and warpage of the third glass plate 30 was also small. In Ex. 1, the third glass plate 30 does not substantially bend. Thus, even if the vacuum insulated glass 10 tries to warp, protruding to the right, the third glass plate 30 pulls the vacuum insulated glass 10 back to the left via the gas layer 20. Thermal shrinkage of the gas layer 20 also acts to pull the vacuum insulated glass 10 back to the left. Accordingly, warpage of the vacuum insulated glass 10 can be suppressed.

When both the exterior temperature and the interior temperature are 25°C, both in Ex. 1 and Ex. 2, the vacuum insulated glass 10 and the third glass plate 30 did not substantially warp.

In addition to the above embodiment, the following other configurations will also be disclosed.

### [Configuration 1]

A multiple glazing, which comprises a vacuum insulated glass having a first glass plate, a vacuum layer and a second glass plate in this order in a predetermined direction, a gas layer, and a third glass plate or a laminated glass in this order in the above predetermined direction,
wherein a thickness of the third glass plate or the laminated glass is larger than a thickness of the vacuum insulated glass.

### [Configuration 2]

The multiple glazing according to Configuration 1, wherein a difference between the thickness of the third glass plate or the laminated glass, and the thickness of the vacuum insulated glass, is 0.5 mm or more.

### [Configuration 3]

The multiple glazing according to Configuration 1 or 2, which has a low-emissivity coating on at least one of a first surface and a second surface, facing each other, of the first glass plate and the second glass plate, and a third surface and a fourth surface, facing each other, of the third glass plate or the laminated glass and the vacuum insulated glass.

### [Configuration 4]

The multiple glazing according to any one of Configurations 1 to 3, wherein at least one of the first glass plate and the second glass plate is a tempered glass.

### [Configuration 5]

The multiple glazing according to Configuration 4, wherein a thickness of the tempered glass is 0.5 mm to 2.0 mm.

### [Configuration 6]

The multiple glazing according to any one of Configurations 1 to 5, wherein a thickness of the gas layer is 3 mm to 20 mm.

The multiple glazing according to the present disclosure was described, however, the present disclosure is not limited to the above embodiments, etc. Within the scope of Claims of the present invention, various changes, modifications, replacement, addition, deletion and a combination thereof are possible. Those are, of course, included in the present disclosure.

The entire disclosure of Japanese Patent Application No. 2023-125277 filed on August 1, 2023 including specification, claims, drawings and summary is incorporated herein by reference in its entirety.

### REFERENCE SYMBOLS

- 2:: multiple glazing
- 10:: vacuum insulated glass
- 11:: first glass plate
- 12:: vacuum layer
- 13:: second glass plate
- 20:: gas layer
- 30:: third glass plate

## Claims

1. A multiple glazing, which comprises a vacuum insulated glass having a first glass plate, a vacuum layer and a second glass plate in this order in a predetermined direction, a gas layer, and a third glass plate or a laminated glass in this order in the above predetermined direction,
wherein a thickness of the third glass plate or the laminated glass is larger than a thickness of the vacuum insulated glass.

2. The multiple glazing according to Claim 1, wherein a difference between the thickness of the third glass plate or the laminated glass, and the thickness of the vacuum insulated glass, is 0.5 mm or more.

3. The multiple glazing according to Claim 1 or 2, which has a low-emissivity coating on at least one of a first surface and a second surface, facing each other, of the first glass plate and the second glass plate, and a third surface and a fourth surface, facing each other, of the third glass plate or the laminated glass and the vacuum insulated glass.

4. The multiple glazing according to Claim 1 or 2, wherein at least one of the first glass plate and the second glass plate is a tempered glass.

5. The multiple glazing according to Claim 4, wherein a thickness of the tempered glass is 0.5 mm to 2.0 mm.

6. The multiple glazing according to Claim 1 or 2, wherein a thickness of the gas layer is 3 mm to 20 mm.
